# EUROPÄISCHE PATENTSCHRIFT

(11) **EP 0 990 560 B1**
(45) Veröffentlichungstag und Bekanntmachung des Hinweises auf die Patenterteilung: **12.05.2004**
(21) Anmeldenummer: 99119370.7
(22) Anmeldetag: 29.09.1999
(51) Int. Cl.: B60R 13/01, B60R 7/02

(54) **Kofferraum-Verkleidung sowie Verfahren zu deren Montage**
Trunk liner and method of mounting the same
Revêtement de coffre et son procédé de montage

(30) Priorität: 30.09.1998 DE 19845099
(43) Veröffentlichungstag der Anmeldung: 05.04.2000
(73) Patentinhaber: MAGNA NÄHER GmbH, 71706 Markgröningen (DE)
(72) Erfinder: Kobiela, Andreas, Dipl.-Ing., 71706 Markgröningen (DE); Pestke, Joachim, Dipl.-Ing., 71706 Markgröningen (DE)
(74) Vertreter: Patentanwälte Ruff, Wilhelm, Beier, Dauster & Partner

(56) Entgegenhaltungen:
- EP-A- 0 266 024
- GB-A- 2 115 754
- GB-A- 2 118 109
- PATENT ABSTRACTS OF JAPAN vol. 7, no. 116 (M-216), 20. Mai 1983 (1983-05-20) & JP 58 036738 A (NISSAN JIDOSHA KK), 3. März 1983 (1983-03-03)
- PATENT ABSTRACTS OF JAPAN vol. 7, no. 116 (M-216), 20. Mai 1983 (1983-05-20) & JP 58 036737 A (NISSAN JIDOSHA), 3. März 1983 (1983-03-03)
- PATENT ABSTRACTS OF JAPAN vol. 7, no. 116 (M-216), 20. Mai 1983 (1983-05-20) & JP 58 036739 A (NISSAN JIDOSHA KK), 3. März 1983 (1983-03-03)

## Beschreibung

Die vorliegende Erfindung betrifft eine Kofferraum-Verkleidung sowie ein Verfahren zu deren Montage.

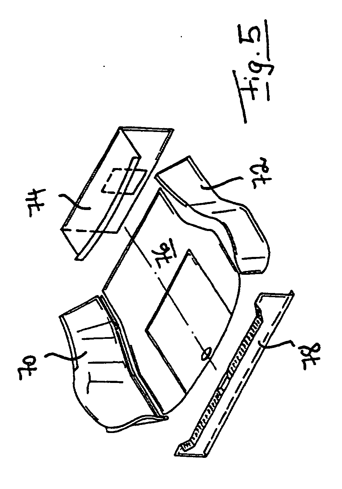

Es ist bereits bekannt und üblich, Kofferraum-Verkleidungen für Kraftfahrzeuge, insbesondere Personenkraftfahrzeuge, durch Herstellung und separate Montage einzelner Verkleidungsteile herzustellen. Dabei kommen, wie in Fig. 5 hinsichtlich des Standes der Technik offenbart, verschiedene Einzelteile zum Einsatz, die getrennt hergestellt und in manuell aufwendiger Weise montiert werden. Zunächst wird eine Verkleidung der Trennwand bzw. Hutablage eingebaut, wobei auch eine Trennung der Verkleidungen von Trennwand und Hutablage im Einsatz ist. Sodann werden zwei voneinander getrennte Seitenverkleidungen links und rechts eingesetzt und montiert. Ferner wird eine Bodenverkleidungsplatte eingebracht und aufgesetzt. Schließlich wird eine Verkleidung für den Heckabschluss bzw. die Ladekante eingesetzt. Die Verkleidungen für die Heckleuchten sind gewöhnlich in den Seitenverkleidungen integriert.

Die Aufteilung der gesamten Kofferraum-Verkleidung in einzelne Verkleidungen, nämlich Seitenverkleidung links, Seitenverkleidung rechts, Verkleidung Trennwand, Verkleidung Hutablage, Verkleidung Boden und Verkleidung Heckabschluss ist mit einem hohen Aufwand bei der Montage verbunden. Der Zeitaufwand, Materialaufwand und Personalaufwand ist erheblich. Ferner ist eine komplizierte Logistik zur Montage der einzelnen Baugruppen mit wiederum hohem Zeitaufwand erforderlich.

Die Patentschrift GB-A-2 115 754 zeigt eine Kofferraumverkleidung, die aus einem mehrteiligen Verkleidungselement mit Boden und Seitenteilen besteht. Die Teile können zum Ein- und Ausbau eingeklappt werden. Die Montage dieser Verkleidung gestaltet sich jedoch schwierig, da alle Teile miteinander durch Faltlinien verbunden sind. Außerdem wird die obere Wand des Kofferraums nicht abgedeckt.

Aufgabe der befriedigenden vorliegenden Erfindung ist die Angabe einer Kofferraum-Verkleidung sowie eines Verfahrens zu deren Montage, bei dem der Aufwand reduziert und somit die Kosten gesenkt sind.

Der Erfindung liegt der Gedanke zugrunde, durch Zusammenfassung einzelner Verkleidungsteile zu größeren integralen Elementen den Montageaufwand in der kostenintensiven Kfz-Endmontage zu senken. Dabei sind die integralen Elemente mit einer speziellen Gestaltung versehen und zu deren Montage wird ein spezielles Montageverfahren vorgestellt. Aus montagetechnischen Gründen entstehen dabei neue Zuordnungen von bestimmten Verkleidungsteilen.

Die Lösung der Aufgabe wird erreicht durch eine Kofferraum-Verkleidung nach Anspruch 1. Durch die Einklappbarkeit mehrteiliger formstabiler bzw. biegesteifer Verkleidungselemente wird eine Verringerung der Baugröße beim Einbau erzielt. Nach der Einführung in den Kofferraum werden die Teile wieder ausgeklappt. Die Seitenverkleidungsteile links und rechts sind integral mit einem verbindenden Mittelteil ausgebildet in Form eines bevorzugt einstückigen Seitenverkleidungselementes. Dadurch lässt sich die Teileanzahl wesentlich reduzieren. Die offenbarte Kofferraum-Verkleidung weist ferner ein Bodenverkleidungselement auf, das ein mittig einklappbar ausgebildetes Bodenverkleidungsteil und ein damit schwenkbar verbundenes, insbesondere quer einklappbar ausgebildetes Trennwandteil aufweist. Dadurch sind bodenverkleidung und Trennwand in einem Element integriert. Die schwenkbar ausgebildeten Teile dienen der manuellen Einführung und Montage der Verkleidung. Das wenigestens eine Verkleidungselement weist eine textile Dekorfläche auf. Die Verbindungen zwischen den Seitenverkleidungsteilen und dem Mittelteil sind durch Scharniere, insbesondere Filmscharniere gebildet, die vorzugsweise in Fahrtrichtung angeordnete Schwenkachsen aufweisen. Die Schwenkachsen können auch einen Winkel von 1-20° zur Fahrtrichtung bilden. Dadurch lässt sich das Seitenverkleidungselement bequem manuell in den Kofferraum einbringen und montieren. Das Mittelteil kann alternativ auch die Seitenverkleidungsteile im unteren Bereich verbinden und als Bodenverkleidungsteil dienen.

Das Mittelteil ist bevorzugt als Hutablage-Verkleidungsteil ausgebildet und weist mindestens zwei in Fahrtrichtung angeordnete Führungsschienen auf, die zur Befestigung im Kofferraum des Kfz dienen. Das Seitenverkleidungselement wird an den Führungsschienen in entsprechende Führungen im Kfz-Kofferraum eingeführt.

Die Seitenverkleidungsteile weisen bevorzugt im wesentlichen in einer Ebene ausgebildete Seitenabschnitte und damit verbundene Mittelabschnitte auf, die in einem Winkel, bevorzugt und insbesondere senkrecht, zu den Seitenabschnitten angeordnet sind. Dadurch kann die Verformung der Seitenverkleidung in eingeklapptem Zustand ausgeglichen werden.

Die Mittelabschnitte sind bevorzugt schwenkbar bzw. klappbar mit den Seitenabschnitten verbunden. Hierdurch entstehen in einer bevorzugten Ausführungsform zwei weitere Schwenkachsen mit entsprechenden Scharnieren, insbesondere Filmscharniere, die die Einsatzvariabilität des Seitenverkleidungselements erhöhen. Die Mittelabschnitte können aber auch fest mit den Seitenabschnitten verbunden sein.

Die offenbarte Kofferraum-Verkleidung weist ferner bevorzugt ein Bodenverkleidungselement auf, das ein mittig einklappbar ausgebildetes Bodenverkleidungsteil und ein damit schwenkbar verbundenes quer einklappbar ausgebildetes Trennwandteil aufweist. Dadurch sind Bodenverkleidung und Trennwand in einem Element integriert. Die schwenkbar ausgebildeten Teile dienen der manuellen Einführung und Montage der Verkleidung.

Bevorzugt ist die Klappachse des Bodenverkleidungsteils im wesentlichen coplanar und senkrecht zur Schwenkachse (zwischen Bodenverkleidungsteil und Stirnwandteil) angeordnet. Dadurch ist wiederum die Montage vereinfacht.

Das Bodenverkleidungsteil weist bevorzugt eine Ausnehmung für das Reserverad auf. Bevorzugt weist das Trennwand-Verkleidungsteil eine Ausnehmung zur Durchführung von überlangen Gegenständen auf.

Die eingangs geschilderte Kofferraum-Verkleidung weist als bevorzugtes (weiteres) Element ein Heckverkleidungselement auf, das ein Heckverkleidungsteil und zwei damit schwenkbar verbundene Heckleuchten-Verkleidungsteile aufweist. Damit wird die Heckleuchten-Verkleidung in das Heckverkleidungs-element integriert und die Montage ist wiederum vereinfacht.

Das Heckverkleidungsteil weist bevorzugt zwei seitlich angebrachte vertikal verlaufende Führungsleisten auf, die die Montage vereinfachen.

Die Schwenkachsen zwischen je einem Heckleuchten-Verkleidungsteil und dem Heckverkleidungsteil verlaufen vorzugsweise parallel zu den Führungsleisten und sind durch Scharniere gebildet. Insbesondere kommen wieder Filmscharniere zum Einsatz.

Bevorzugt ist an der in Montageposition unteren Kante der Seitenabschnitte der Seitenverkleidungsteile ein Absatz bzw. eine Nut gebildet, die dazu dient, mit dem Rand des Bodenverkleidungsteils zusammenzuwirken. Dadurch wird eine montagetechnisch vereinfachte Arretierung bzw. Fixierung der Seitenverkleidungsteile erreicht.

Es ist bevorzugt, daß an der in der Montageposition hinteren Kante der Seitenabschnitte der Seitenverkleidungsteile und gegebenenfalls an einer hinteren Kante des Mittelabschnitts ein Absatz bzw. eine Nut gebildet ist, der dazu dient, mit einem seitlichen und gegebenenfalls oberen Rand des Trennwandteils zusammenzuwirken. Dadurch wird eine montagetechnisch vereinfachte Arretierung bzw. Fixierung des Stirnwandteils erreicht.

Es ist bevorzugt, daß an den in der Montageposition vorderen Kanten der Seitenabschnitte der Seitenverkleidungsteile ein Absatz bzw. eine Nut gebildet ist, der dazu dient, mit einem Rand der Heckleuchten-Verkleidungsteile zusammenzuwirken. Dadurch wird eine Fixierung auch der Verkleidungsteile für die Heckleuchten vereinfacht.

Bei allen vorgenannten Verkleidungsteilen ist bevorzugt, daß sie eine textile Dekorfläche aufweisen, die auf einem Kunststoff-Trägermaterial aufgeschichtet ist, wobei das Trägermaterial durch Hinterspritzen oder Hinterprägen gebildet und mit der Dekorfläche verbunden ist. Dadurch lassen sich einstückige und integrale Verbundverkleidungsteile herstellen, die an der zum Innenraum des Kofferraums gelegenen Seite ein ästhetisch befriedigendes Dekor aufweisen und an der zur Karosserie hin gelegenen Seite einen stabilen Kunststoffträger aufweisen.

Der hinterprägte Kunststoffträger kann mit integrierter Funktionalität (Versteifungsrippen, Befestigungselementen etc.) ausgebildet werden.

Ein Verfahren zur Montage der Kofferraum-Verkleidung ist Gegenstand des Anspruchs 16 und betrifft ein Verfahren zur Montage von ein- und ausklappbaren Verkleidungsteilen eines Kraftfahrzeugs, die vorzugsweise ein Seitenverkleidungselement und ein Bodenverkleidungselement aufweisen. Das Verfahren sieht vor:

Einführen des eingeklappten Seitenverkleidungsmoduls in den Kofferraum, Ausklappen des Seitenverkleidungselements, Einführen des eingeklappten Bodenverkleidungselementes in den Kofferraum, Ausklappen des Bodenverkleidungselementes unter Fixierung des Seitenverkleidungselementes. Dadurch werden die Verkleidungsteile bequem in den Kofferraum eingeführt und montagetechnisch leicht durch Auseinanderklappen der Teile montiert.

In einem weiteren Schritt ist bevorzugt vorgesehen das Einführen eines Heckverkleidungselementes mit eingeklappten Heckleuchten-Verkleidungsteilen sowie das Ausklappen der Heckverkleidungsteile im Kofferraum.

Bevorzugt wird beim Ausklappen der Bodenverkleidungsteile deren Rand in eine Absatz bzw. eine Nut der Seitenverkleidungsteile eingerastet. Dadurch werden die Teile gegeneinander arretiert und fixiert.

Bevorzugt wird beim Ausklappen des Stimwandteils deren Rand in einem Absatz bzw. in einer Nut der Seitenverkleidungsteile eingerastet. Dadurch wird eine Fixierung der Teile gegeneinander erreicht.

Bevorzugt wird beim Ausklappen der Heckleuchten-Verkleidungsteile deren Rand in einem Absatz der Seitenverkleidungsteile eingerastet. Auch dadurch wird die Fixierung der Teile gegeneinander verbessert.

Weitere Vorteile, Merkmale und Anwendungsmöglichkeiten der vorliegenden Erfindung ergeben sich aus der nachfolgenden Beschreibung eines bevorzugten Ausführungsbeispiels in Verbindung mit der Zeichnung.
Fig. 1a zeigt eine perspektivische Ansicht eines Seitenverkleidungselements gemäß der Erfindung im ausgeklappten Zustand.
Fig. 1b zeigt das Seitenverkleidungselement nach Fig. 1a im eingeklappten Zustand.
Fig. 2a zeigt ein Bodenverkleidungselement gemäß der Erfindung im ausgeklappten Zustand.
Fig. 2b zeigt das Bodenverkleidungselement von Fig. 2a in zusammengeklappten Zustand.
Fig. 3a zeigt ein Heckverkleidungselement gemäß der Erfindung mit ausgeklappten Heckleuchten-Verkleidungsteilen.
Fig. 3b zeigt das Heckverkleidungselement von Fig. 3a mit eingeklappten Heckleuchten-Verkleidungsteilen.
Fig. 4a zeigt eine Rückansicht eines Kfz-Innenraum mit eingeführtem Seitenverkleidungselement.
Fig. 4b zeigt die Ansicht von Fig. 4a mit ausgeklapptem Seitenverkleidungselement und eingeführtem Bodenverkleidungselement.
Fig. 4c zeigt die Ansicht von Fig. 4b mit ausgeklapptem Bodenverkleidungselement und eingeführtem Heckverkleidungselement.
Fig. 5 zeigt eine Anordnung von Kofferraum-Verkleidungsteilen gemäß dem Stand der Technik.

Wie in Fig. 5 gezeigt, weist der Stand der Technik eine linke Seitenverkleidung 70, eine rechte Seitenverkleidung 72, eine Trennwand- und Hutablageverkleidung 74 und eine Bodenverkleidung 76 auf. Ferner ist eine Heck- bzw. Ladekantenverkleidung 78 vorgesehen. Die einzelnen Verkleidungsteile werden getrennt hergestellt und getrennt montiert. Der montagetechnische und logistische Aufwand ist hoch.

Die nachfolgend genannten Kofferverkleidungselemente bzw. dessen Teile sind biegesteif bzw. formstabil ausgebildet. Dabei sind Steifigkeiten im Bereich von 8-120 N nach EN 63 (Europäische Norm) vorgesehen. Es sind bevorzugt Verkleidungen aus Kunststoff-Trilaminat (8-39 N) und aus Flachs-PP oder dgl. hergestellte Kunststoffe (35-90 N) vorgesehen.

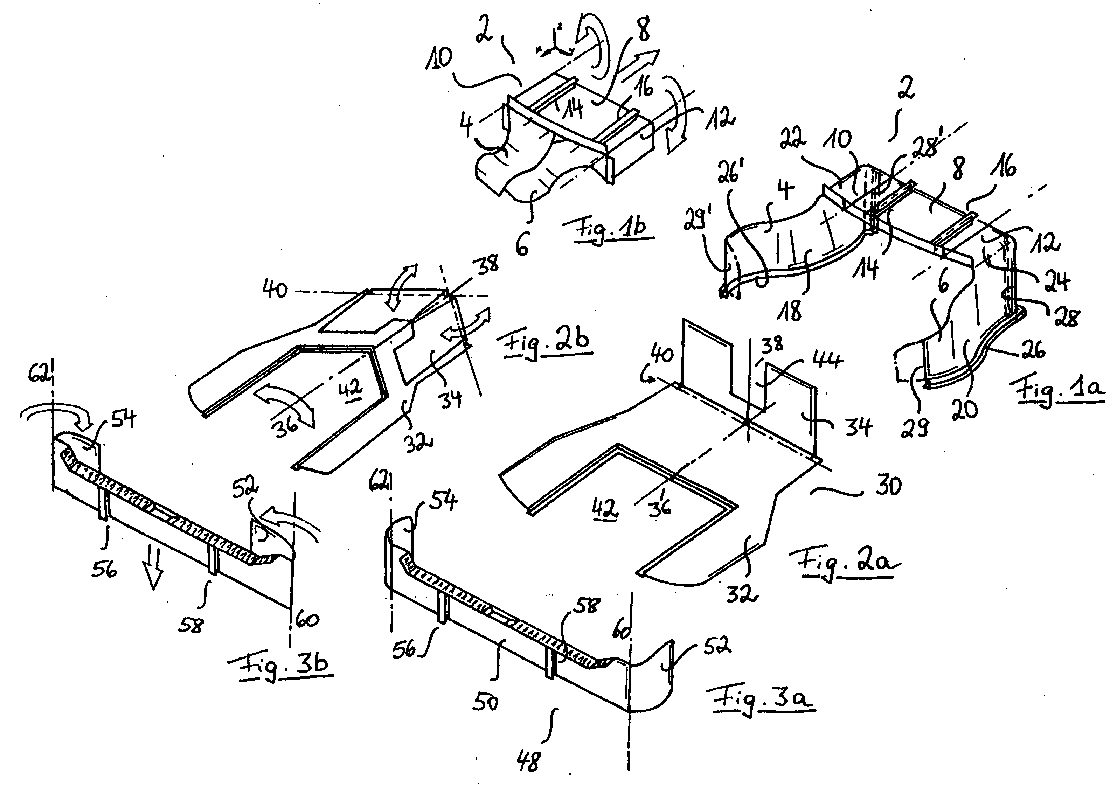

Wie in Fig. 1a gezeigt, sieht ein mit modulartig zusammengefaßten Teilen ausgebildetes Seitenverkleidungselement 2 die Zusammenfassung der Seitenverkleidungsteile 4, 6 und des Mittelteils 8 in einem einstückigen bzw. integralen Seitenverkleidungselement 2 vor. Das Mittelteil 8 bilden den oberen Deckel der Kofferraum verkleidung. Dabei ist das linke Seitenverkleidungsteil 4 und das rechte Seitenverkleidungsteil 6 durch ein Mittelteil 8 einstückig verbunden, wobei an den Verbindungsstellen Filmscharniere 10, 12 vorgesehen sind, die eine Klappbarkeit der Seitenverkleidungsteile gegenüber dem Mittelteil gewährleisten. Ferner sind im Mittelteil 8 zwei Führungsschienen 14, 16 vorgesehen, die in Längsrichtung bzw. Fahrtrichtung des Kraftfahrzeugs verlaufen. Die Führungsschienen 14, 16 dienen zur Montage des Seitenverkleidungselements im Kofferraum.

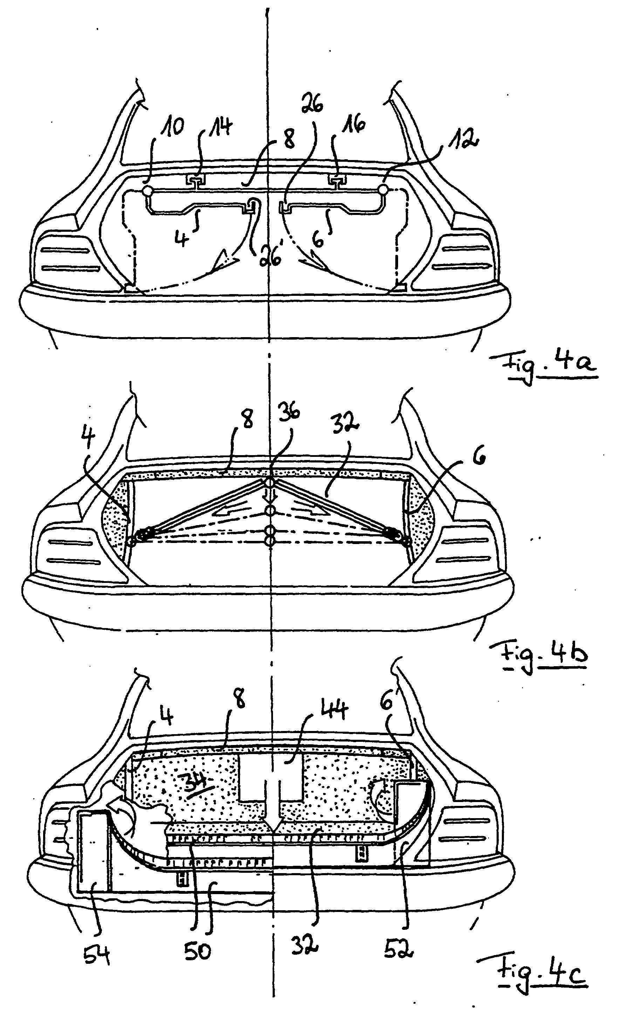

Die Seitenverkleidungsteile 4, 6 haben im wesentlichen in einer Ebene verlaufende Seitenabschnitte 18, 20, die an ihrer unteren Kante mit einem längs der Kante verlaufenden Absatz 26, 26' versehen sind, wie man es besonders gut in Fig. 4a erkennen kann. Diese Absätze dienen zur Fixierung der Seitenverkleidungsteile.

Ferner haben die Seitenabschnitte 18, 20 an ihrer hinteren Kante Absätze 28, 28', die endseitig an die Absätze 26, 26' jeweils anstoßen. Diese Absätze 28, 28' dienen ebenfalls zur Fixierung bzw. Positionierung der Seitenverkleidungsteile. An die Seitenabschnitte 18, 20 schließen sich im rechten Winkel Mittelabschnitte 22, 24 an, die in Richtung des Mittelteils 8 einen Übergang darstellen.

Wie in Fig. 1b gezeigt, läßt sich das im ausgeklappten Zustand in Fig. 1a gezeigte Seitenverkleidungselement durch Einklappen der Seitenverkleidungsteile 4, 6 in den eingeklappten Zustand überführen. In diesem Zustand läßt es sich in die in Fig. 4a gezeigte Position des Kofferraums einführen. Durch Ausklappen der Seitenverkleidungsteil 4, 6 wird das Seitenverkleidungselement 2 vorläufig positioniert.

In Fig. 2a ist ein Bodenverkleidungselement 30 gemäß der Erfindung gezeigt. Dies besteht aus einem Bodenverkleidungsteil 32, das in Form zweier ineinanderklappbar bzw. schwenkbar verbundener Hälften ausgebildet ist. Die beiden Hälften sind bevorzugt spiegelbildlich ausgebildet und bevorzugt durch ein Filmscharnier verbunden. An seiner Stirnkante ist ebenfalls klappbar ein Trennwandteil 34 angelenkt, wobei deren Schwenkachse 40 coplanar zur Schwenkachse 36 des Bodenverkleidungsteils 30 angeordnet ist. Das Stirnwandteil 34 ist seinerseits schwenkbar bzw. klappbar angeordnet und mit zwei bevorzugt einander spiegelbildlich entsprechenden Hälften ausgebildet. Das Bodenverkleidungsteil 32 weist eine Ausnehmung 42 für einen Reserveraddeckel auf. Ferner weist das Trennwandteil 34 eine Ausnehmung 38 zur Durchführung überlanger Gegenstände auf. Wie in Fig. 2b gezeigt läßt sich das Bodenverkleidungselement 30 durch Einklappen des Stirnwandteils 34 auf den Bodenverkleidungsteil 32 und Abwinkeln der Bodenverkleidungsteil-Hälften in den in Fig. 2b gezeigten eingeklappten Zustand überführen. Dabei reißt das Trennwandteil 34 an der Achse 38 auf. In diesem Zustand wird es wie in Fig. 4b gezeigt, in den Kofferraum des Kraftfahrzeugs eingeführt. Dabei kommt es zu einer aufgrund der Gewichtskraft unterstützten Absenkung und demzufolge planen Anordnung des Bodenverkleidungsteils 32 und zum Eingriff der Ränder in die Absätze bzw. Nuten 26, 26' der Seitenverkleidungsteile 6, 4. Auf diese Weise werden die Teile gegeneinander positioniert.

Schließlich ist in Fig. 3a ein Heckverkleidungsteil 48 offenbart. Dieses ist ein langgestrecktes Teil mit zwei endseitig klappbar angelenkten Heckleuchtenverkleidungsteilen 52, 54. Diese lassen sich um Klappachsen 60, 62 schwenken. Die Verbindung wird jeweils durch ein Filmscharnier bewerkstelligt. An dem Heckverkleidungsteil sind ferner zwei vertikal angeordnete Führungsleisten 56, 58 vorgesehen, die zur Einführung in den Kofferraum des Kraftfahrzeugs dienen. In Fig. 3b ist das Heckverkleidungselement in seiner durch Einklappen der Heckleuchten-Verkleidungsteile eingeklappten Position gezeigt. In dieser Position wird es, wie in Fig. 4c gezeigt, senkrecht von oben nach unten in den Kofferraum eingesetzt, dabei greifen die Schienen 56, 58 in entsprechende Führungen des Kofferraums ein. Durch Ausklappen der Heckleuchten-Verkleidungsteile werden diese montiert. Gegebenenfalls greifen sie zusätzlich in entsprechende Absätze bzw. Nuten der anliegenden bzw. angrenzenden Seitenverkleidungsteile 4, 6 ein und werden damit verriegelt.

## Patentansprüche

1. Kofferraum-Verkleidung für ein Kraftfahrzeug, welche mindestens ein formstabiles bzw. biegesteifes mehrteiliges Kofferraumverkleidungselement (2; 30; 48) aufweist, dessen Teile zur Verringerung der Baugröße während des Einbaus in den Kofferraum einklappbar sind, wobei das mehrteilige Kofferraumverkleidungselement (2; 30; 48)
a) ein Seitenverkleidungselement (2) mit zwei Seitenverkleidungsteilen (4, 6), die durch ein Mittelteil (8), welches in ausgeklapptem Zustand als Deckel der Kofferraum-Verkleidung dient, integral verbunden sind, aufweist und
b) ein Bodenverkleidungselement (30) mit einem Bodenverkleidungsteil (32) und einem damit schwenkbar bzw. klappbar verbundenem Trennwandteil (34) aufweist und
c) das Kofferraumverkleidungselement (2; 30; 48) eine textile Dekorfläche aufweist.

2. Kofferraum-Verkleidung nach Anspruch 1, **dadurch gekennzeichnet, dass** die Verbindungen der beiden Seitenverkleidungsteile (4, 6) mit dem Mittelteil (8) schwenkbar bzw. klappbar ausgebildet sind.

3. Kofferraum-Verkleidung nach Anspruch 2, **dadurch gekennzeichnet, dass** das Mittelteil (8) als Hutablage-Verkleidungsteil ausgebildet ist und mindestens zwei in Fahrtrichtung angeordnete Führungsschienen (14, 16) aufweist, die zur Befestigung im Kofferraum des Kraftfahrzeugs dienen.

4. Kofferraum-Verkleidung nach einem der vorhergehenden Ansprüche, aufweisend ein Heckverkleidungselement (48), das ein Heckverkleidungsteil (50) und zwei damit schwenkbar bzw. klappbar verbundene Heckleuchten-Verkleidungsteile (52, 54) aufweist.

5. Verfahren zur Montage von ein- und ausklappbaren Kofferraum-Verkleidungsteilen eines Kraftfahrzeugs, die ein Seitenverkleidungselement (2) und ein Bodenverkleidungselement (30) aufweisen, mit den Schritten:
Einführen des eingeklappten Seitenverkleidungselementes (2) in den Kofferraum des Kraftfahrzeugs,
Ausklappen des Seitenverkleidungselementes (2),
Einführen des eingeklappten Bodenverkleidungselementes (30) in den Kofferraum des Kraftfahrzeugs,
Ausklappen des Bodenverkleidungselementes (30) unter Fixierung des Seitenverkleidungselementes (2).

6. Verfahren zur Montage von Kofferraum-Verkleidungsteilen nach Anspruch 5, aufweisend den weiteren Schritt:
Einführen eines Heckverkleidungselementes (48) mit eingeklappten Heckleuchten-Verkleidungsteile (52, 54) und
Ausklappen der Heckleuchten-Verkleidungsteile (52, 54).

7. Verfahren nach Anspruch 5 oder 6, **dadurch gekennzeichnet, dass** beim Ausklappen des Bodenverkleidungselementes (30) deren Rand in einen Absatz (26, 26') bzw. Nut der Seitenverkleidungsteile (4, 6) eingerastet wird.

8. Verfahren nach einem der Ansprüche 5 bis 7, **dadurch gekennzeichnet, dass** beim Ausklappen des Trennwandteils (34) des Bodenverkleidungselementes (30) deren Rand in einen Absatz (28, 28') bzw. Nut der Seitenverkleidungsteile (4, 6) eingerastet wird.

9. Verfahren nach einem der vorhergehenden Ansprüche 5 bis 8, **dadurch gekennzeichnet, dass** beim Ausklappen der Heckleuchten-Verkleidungsteile (52, 54) deren Rand in einen Absatz (29, 29') der Seitenverkleidungsteile (4, 6) eingerastet wird.

## Claims

1. Trunk lining for a motor vehicle, which has at least one dimensionally stable and flexurally rigid, multipart trunk lining element (2; 30; 48) whose parts can be folded in in order to reduce the overall size while it is being fitted into the trunk, the multipart trunk lining element (2; 30; 48)
a) having a side lining element (2) with two side lining parts (4, 6) integrally connected by means of a central part (8), which, when unfolded, serves as a cover of the trunk lining, and
b) having a floor lining element (30) with a floor lining part (32) and a partition part (34) which is connected pivotably or foldably thereto, and
c) the trunk lining element (2; 30; 48) having a textile decorative surface.

2. Trunk lining according to Claim 1, **characterized in that** the connections of the two side lining parts (4, 6) to the central part (8) are designed to be pivotable or foldable.

3. Trunk lining according to Claim 2, **characterized in that** the central part (8) is designed as a rear-parcel-shelf lining element which has at least two guide rails (14, 16) which are arranged in the direction of travel and serve to secure it in the trunk of the motor vehicle.

4. Trunk lining according to one of the preceding claims, having a rear-end lining element (48) which has a rear-end lining part (50) and two rear-light lining parts (52, 54) which are connected pivotably and foldably thereto.

5. Method for installing trunk lining parts of a motor vehicle, which parts can be folded in and unfolded and have a side lining element (2) and a floor lining element (30), having the following steps:
introducing the folded-in side lining element (2) into the trunk of the motor vehicle,
unfolding the side lining element (2),
introducing the folded-in floor lining element (30) into the trunk of the motor vehicle,
unfolding the floor lining element (30) fixing the side lining element (2) in place.

6. Method for installing trunk lining parts according to Claim 5, having the further step of:
introducing a rear-end lining element (48) with rear-light lining parts (52, 54) folded in, and
unfolding the rear-light lining parts (52, 54).

7. Method according to Claim 5 or 6, **characterized in that** during the unfolding of the floor lining element (30) its edge is latched into an offset (26, 26') or groove of the side lining parts (4, 6).

8. Method according to one of Claims 5 to 7, **characterized in that** during the unfolding of the partition part (34) of the floor lining element (30) its edge is latched into an offset (28, 28') or groove of the side lining parts (4, 6).

9. Method according to one of the preceding claims 5 to 8, **characterized in that** during the unfolding of the rear-light lining parts (52, 54) their edge is latched into an offset (29, 29') of the side lining parts (4, 6).

## Revendications

1. Revêtement de coffre pour un véhicule automobile, lequel présente au moins un élément de revêtement de coffre en plusieurs parties de forme stable ou rigide en flexion (2 ; 30 ; 48), dont les parties peuvent être rabattues vers l'intérieur pour réduire le volume de construction pendant l'installation dans le coffre, l'élément de revêtement de coffre en plusieurs parties (2 ; 30 ; 48) présentant :
a) un élément de revêtement latéral (2) avec deux parties de revêtement latérales (4, 6), qui sont connectées intégralement par une partie centrale (8) qui sert de couvercle pour le revêtement de coffre dans l'état rabattu vers l'extérieur, et
b) un élément de revêtement de fond (30) avec une partie dé revêtement de fond (32) et une partie de paroi de séparation (34) connectée avec celle-ci de manière pivotante ou rabattable, et
c) l'élément de revêtement de coffre (2 ; 30 ; 48) présentant une surface décorative textile.

2. Revêtement de coffre selon la revendication 1, **caractérisé en ce que** les connexions des deux parties de revêtement latérales (4, 6) à la partie centrale (8) sont réalisées de manière à pouvoir pivoter ou être rabattues.

3. Revêtement de coffre selon la revendication 2, **caractérisé en ce que** la partie centrale (8) est réalisée en tant que partie de revêtement de plage arrière et présente au moins deux rails de guidage (14, 16) disposés dans la direction de conduite, qui servent à la fixation dans le coffre du véhicule automobile.

4. Revêtement de coffre selon l'une quelconque des revendications précédentes, présentant un élément de revêtement arrière (48), qui présente une partie de revêtement arrière (50) et deux parties de revêtement de lampes arrière (52, 54) connectées de manière à pouvoir pivoter ou se rabattre avec celle-ci.

5. Procédé de montage de parties de revêtement de coffre d'un véhicule automobile pouvant être rabattues vers l'intérieur et vers l'extérieur, qui présentent un élément de revêtement latéral (2) et un élément de revêtement de fond (30), comprenant les étapes suivantes :
introduction de l'élément de revêtement latéral (2) rabattu vers l'intérieur dans le coffre du véhicule automobile,
rabattement vers l'extérieur de l'élément de revêtement latéral (2),
introduction de l'élément de revêtement de fond (30) rabattu vers l'intérieur dans le coffre du véhicule automobile,
rabattement vers l'extérieur de l'élément de revêtement de fond (30) en fixant l'élément de revêtement latéral (2).

6. Procédé de montage de parties de revêtement de coffre selon la revendication 5, présentant l'étape supplémentaire suivante :
introduction d'un élément de revêtement arrière (48) avec des parties de revêtement de lampes arrière (52, 54) rabattues vers l'intérieur et
rabattement vers l'extérieur des parties de revêtement de lampes arrière (52, 54).

7. Procédé selon la revendication 5 ou 6, **caractérisé en ce que** lors du rabattement vers l'extérieur de l'élément de revêtement de fond (30), son bord est encliqueté dans un retrait (26, 26') ou une rainure des parties de revêtement latérales (4, 6).

8. Procédé selon l'une quelconque des revendications 5 à 7, **caractérisé en ce que** lors du rabattement vers l'extérieur de la partie de paroi de séparation (34) de l'élément de revêtement de fond (30), son bord est encliqueté dans un retrait (28, 28') ou une rainure des parties de revêtement latérales (4, 6).

9. Procédé selon l'une quelconque des revendications précédentes 5 à 8, **caractérisé en ce que** lors du rabattement vers l'extérieur des parties de revêtement de lampes arrière (52, 54), leur bord est encliqueté dans un retrait (29, 29') des parties de revêtement latérales (4, 6).
